# EUROPEAN PATENT APPLICATION

(11) **EP 4 517 957 A1**
(43) Date of publication of application: **05.03.2025**
(21) Application number: 23796011.7
(22) Date of filing: 03.04.2023
(51) Int. Cl.: H01M 50/204, H01G 11/06, H01G 11/14, H01G 11/16, H01G 11/18, H01G 11/78, H01G 11/80, H01M 50/202, H01M 50/227, H01M 50/291, H01M 50/293

(54) **POWER STORAGE DEVICE STRUCTURE**

(30) Priority: 26.04.2022 JP 2022072598; 30.11.2022 JP 2022191178
(71) Applicant: Kurita Water Industries Ltd., Tokyo 164-0001 (JP)
(72) Inventor: YAGI Minoru, Tokyo 164-0001 (JP)
(74) Representative: TBK
(86) International application number: PCT/JP2023/013786
(87) International publication number: WO 2023/210264

(57) **Abstract**

A power storage device structure includes a power storage device and a casing that externally encloses the power storage device with a gap therebetween, and has a configuration in which a molded body including a thermally depolymerizable polymer is disposed in the gap between the power storage device and the casing. The molded body preferably has a film shape, a sheet shape, or a plate shape. According to such a power storage device structure, a risk of ignition can be reduced at the time of abnormalities such as damage or overcharging of the power storage device, and particularly a power storage device stack obtained by stacking multiple power storage devices.

## Description

### Technical Field

The present invention relates to a power storage device structure that externally encloses a power storage device such as a lithium-ion battery, a lithium-ion capacitor, and an electric double layer capacitor, and particularly, relates to a power storage device structure capable of reducing a risk of ignition at the time of abnormalities such as damage or overcharging of the power storage device.

### Related Art

In recent years, power storage devices such as secondary batteries, lithium-ion capacitors, and electric double layer capacitors, which include power storage devices using non-aqueous electrolytes accommodated in casings, have been used as power sources for high-output portable devices and electric vehicles.

Such power storage devices generally have a defined upper limit voltage and are controlled not to exceed the upper limit voltage by combining with an appropriate protection circuit. However, in cases where the protection circuit malfunctions and the upper limit voltage is exceeded, repeated charging and discharging occurs, or a short circuit occurs due to external factors, the power storage device turns into an overcharged state, the electrolyte reacts with electrode materials and the like and generates gases, and an internal pressure increases due to the generated gases. The generated gases may include flammable gases such as electrolyte, methane, carbon monoxide, ethylene, ethane, and propane, and when released to outside the power storage device, there will be a risk of ignition or explosion.

In recent years, there has been an increasing demand for a high output and a large capacity in power storage devices such as lithium-ion capacitors and electric double layer capacitors, and it has been more often to use high currents in individual power storage devices or in modular configurations formed by stacking multiple power storage devices. For example, in a module formed by stacking multiple power storage devices, in the case where one power storage device turns into an overcharged state, since the other power storage devices continue to function even after gases are released along with the electrolyte, a large current may continue to flow. Thus, there may be cases of severe overheating due to short circuits, and the risk of ignition or explosion as described above increases.

As techniques to prevent such ignition of power storage devices, for example, methods have been proposed to absorb gases generated inside a lithium-ion battery with a flammable gas absorbent material to prevent rupturing of the battery (Patent Document 1 and Patent Document 2).

On the other hand, a method has also been proposed to dispose a fire extinguishing agent inside a lithium-ion battery to lower the temperature of gases released to outside when a safety valve opens due to an increase in the internal pressure caused by generation of gases inside the battery (Patent Document 3). Furthermore, a method has also been proposed to dispose a porous material with non-flammable gases, aqueous solvents, or non-flammable solvents adsorbed in pores and on a surface thereof inside a lithium-ion battery to prevent ignition caused by gases generated from the lithium-ion battery (Patent Document 4).

### Related Art Documents

### Patent Documents

Patent Document 1: Japanese Patent Application Laid-Open No. 2001-155790
Patent Document 2: Japanese Patent Application Laid-Open No. 2003-077549
Patent Document 3: Japanese Patent Application Laid-Open No. 2010-287488
Patent Document 4: Japanese Patent Application Laid-Open No. 2013-187089

### SUMMARY OF INVENTION

### Problem to Be Solved by Invention

However, since a large amount of gas is generated instantaneously at the time of electrical abnormalities or thermal runaway, the methods of disposing gas adsorbent materials in the power storage device as described in Patent Document 1 and Patent Document 2 have problems that both a gas adsorption amount and a gas adsorption rate are insufficient for the limited space of the power storage device, and ejection of gases from the power storage device is not fully suppressed. Further, the methods of disposing fire extinguishing agents or materials that adsorb non-flammable gases, aqueous solvents, or non-flammable solvents in pores and on a surface of porous materials inside the power storage device to lower the temperature inside the lithium-ion battery as described in Patent Document 3 and Patent Document 4 have problems that if the gas adsorption amount is insufficient, the effect thereof would not be sufficiently exerted, and furthermore, ejection of gases is not fully suppressed.

The present invention has been made in view of the above problems, and an objective thereof is to provide a power storage device structure capable of reducing a risk of ignition at the time of abnormalities such as damage or overcharging of a power storage device, particularly a power storage device stack obtained by stacking multiple power storage devices.

### Means for Solving Problems

To solve the above problems, the present invention provides a power storage device structure including a power storage device and a casing that externally encloses the power storage device with a gap therebetween. A molded body including a thermally depolymerizable polymer that decomposes into monomers due to heating is disposed in the gap between the power storage device and the casing (Invention 1).

According to this invention (Invention 1), by disposing the molded body including the thermally depolymerizable polymer which decomposes into monomers due to heating in a space of the casing which externally encloses the power storage device, rather than inside the power storage device, the risk of fire spreading to outside of the casing can be reduced when ignition occurs inside the power storage device.

In the above invention (Invention 1), the power storage device is preferably obtained using a non-aqueous electrolyte (Invention 2).

According to this invention (Invention 2), an effect of preventing fire spreading to outside can be suitably exerted when ignition occurs due to the non-aqueous electrolyte inside the power storage device.

In the above invention (Invention 1), in the molded body including the thermally depolymerizable polymer, a thermally depolymerizable polymer part is preferably contained in an amount of 10 weight% or more of the total molded body (Invention 3).

According to this invention (Invention 3), an effect of preventing fire spreading to outside can be suitably exerted when ignition occurs inside the power storage device.

In the above invention (Invention 1), the thermally depolymerizable polymer is preferably a polymer, which is a homopolymer or a polymer of two or more components, using one or two or more of methyl methacrylate (MMA), α-methylstyrene (AMS), and tetrafluoroethylene (TFE) as monomer components (Invention 4).

According to this invention (Invention 4), an effect of preventing fire spreading to outside can be suitably exerted when ignition occurs inside the power storage device.

In the above invention (Invention 1), the molded body including the thermally depolymerizable polymer preferably has a film shape, a sheet shape, or a plate shape (Invention 5).

According to this invention (Invention 5), by configuring in the film shape, the sheet shape, or the plate shape, arrangement variations thereof can be diversified, such as adhering to inside of the casing or inserting into a gap part, and ease of handling can be achieved.

In the above invention (Invention 5), the molded body in the film shape, the sheet shape, or the plate shape preferably has a thickness of 1 µm to 5000 µm (Invention 6). Particularly, in the above invention (Invention 6), a weight per unit area of the molded body in the film shape, the sheet shape, or the plate shape is preferably 10 g to 2000 g/m² (Invention 7).

According to these inventions (Invention 6 and Invention 7), by disposing the film-shaped, sheet-shaped, or plate-shaped molded body with predetermined thickness and weight in the gap between the power storage device and the casing, an effect of preventing fire spreading to outside can be suitably exerted when ignition occurs inside the power storage device.

In the above inventions (Invention 1 to Invention 7), a plurality of the power storage devices may be stacked (Invention 8).

In a power storage device stack obtained by stacking multiple power storage devices, even in the case where one power storage device turns into an overcharged state, since the other power storage devices continue to function and a large current continues to flow, severe overheating occurs, and flammable gases are likely to exceed the ignition temperature. At this time, according to this invention (Invention 8), even if flammable gases are ejected from the power storage device and flow into the space of the casing, since the risk of fire spreading to outside the casing can be significantly reduced by the effect of the material of the present invention on flammable gases, it can be particularly suitably applied to a power storage device stack.

### Effects of Invention

By disposing the molded body including the thermally depolymerizable polymer in the gap between the power storage device and the casing, the present invention can significantly reduce the risk of ignition of the power storage device structure by a mechanism in which the thermally depolymerizable polymer thermally decomposes and monomers are generated due to high-temperature ejected materials or ejected gases released from the power storage device as a result of a short circuit and the like of the power storage device. Moreover, since the thermally depolymerizable polymer converts to monomers due to heat, no combustion residue remains inside the casing.

### DESCRIPTION OF EMBODIMENTS

A power storage device structure of the present invention below will be described in detail with reference to an embodiment below.

### [Power storage device structure]

The power storage device structure of this embodiment is composed of a power storage device and a casing that externally encloses the power storage device with a gap therebetween, and has a configuration in which a molded body including a thermally depolymerizable polymer is disposed in the gap between the power storage device and the casing.

### (Power storage device)

In this embodiment, there is no particular limitation on the power storage device, and either a primary battery or a secondary battery may be used, but a secondary battery is preferable. A type of the secondary battery is not particularly limited, and for example, a lithium-ion battery, a lithium-ion polymer battery, an all-solid-state battery, a lead-acid battery, a nickel-metal hydride battery, a nickel-cadmium battery, a nickel-iron battery, a nickel-zinc battery, a silver oxide-zinc battery, a metal-air battery, a multivalent cation battery, a condenser, a capacitor, etc. may be used. Among these, those using a non-aqueous electrolyte may be suitably used. Among these secondary batteries, a lithium-ion battery, a lithium-ion polymer battery, a lithium-ion capacitor, and an all-solid-state battery may be suitably used as suitable application targets of a battery material of the present invention.

As the above non-aqueous electrolyte, for example, a mixed solution of cyclic carbonates such as propylene carbonate (PC) and ethylene carbonate (EC), and chain carbonates such as dimethyl carbonate (DMC), ethyl methyl carbonate (EMC), and diethyl carbonate (DEC) may be used. Further, the above non-aqueous electrolyte may be one in which a lithium salt such as lithium hexafluorophosphate is dissolved as an electrolyte as necessary. For example, a non-aqueous electrolyte obtained by adding 1 mol/L of lithium hexafluorophosphate into a mixed solution of ethylene carbonate (EC), ethyl methyl carbonate (EMC), and dimethyl carbonate (DMC) mixed in a ratio of 1:1:1, or into a mixed solution of propylene carbonate (PC), ethylene carbonate (EC), and diethyl carbonate (DEC) mixed in a ratio of 1:1:1, may be used.

The power storage device as described above may be in the form of a power storage device stack composed of multiple stacked power storage devices. The power storage device stack is particularly suitable because even in the case where one power storage device turns into an overcharged state, the other power storage devices continue to function and a large current continues to flow, and thus, when a flammable gas is generated due to the non-aqueous electrolyte, the temperature is likely to reach an ignition temperature or above.

### (Casing)

In this embodiment, there is no particular limitation on the casing as long as it is capable of externally enclosing the above power storage device (power storage device stack) with a gap therebetween. The casing includes a storage case of the power storage device (power storage device stack) such as a battery case, a housing of a machine that uses the power storage device (power storage device stack), etc. A material of the casing is not limited and may be synthetic resin, metal, etc.

### (Ignition prevention material)

In this embodiment, a molded body including a thermally depolymerizable polymer is disposed as an ignition prevention material to be disposed in the gap between the power storage device and the casing.

### (Thermally depolymerizable polymer)

In this embodiment, a thermally depolymerizable polymer refers to a polymer that possesses depolymerization properties in which the polymer decomposes into monomers due to heat or light, and leaves no residue upon heating. Examples of the above thermally depolymerizable polymer include a thermally depolymerizable polymer that takes, as a base polymer, a polymer (a homopolymer or a polymer of two or more components) using one or two or more of methyl methacrylate (MMA), α-methylstyrene (AMS), and tetrafluoroethylene (TFE) as monomer components. Among these, a polymer taking methyl methacrylate (MMA) and α-methylstyrene (AMS) as monomer components is preferable, and a polymer composed of methyl methacrylate (MMA): α-methylstyrene (AMS) particularly in a molar ratio of 20:80 to 80:20, and further in a molar ratio of 40:60 to 60:40, is preferable. Such a thermally depolymerizable polymer can significantly reduce the risk of ignition of the power storage device structure by a mechanism in which the thermally depolymerizable polymer thermally decomposes and monomers are generated due to high-temperature ejected materials or ejected gases released from the power storage device as a result of a short circuit and the like of the power storage device.

The above thermally depolymerizable polymer may include any appropriate additive as necessary. Examples of such an additive include crosslinking agents, tackifiers, plasticizers (e.g., trimellitic acid ester-based plasticizers, pyromellitic acid ester-based plasticizers, etc.), pigments, dyes, fillers, anti-aging agents, conductive materials, antistatic agents, ultraviolet absorbers, light stabilizers, release adjusting agents, softeners, surfactants, flame retardants, antioxidants, etc.

In this embodiment, there is no particular limitation on a shape of the molded body disposed in the gap between the power storage device and the casing. However, considering ease of handling when disposing in the gap between the power storage device and the casing, the shape is preferably configured to be a film shape, a sheet shape, or a plate shape. By configuring the ignition prevention material in a film shape, a sheet shape, or a plate shape, arrangement variations may be diversified, such as adhering to inside of the casing or inserting into a gap part.

Furthermore, it is also possible to use these ignition prevention materials by applying materials that exert a cooling effect by heat absorption, an effect of suppressing combustion radical reactions, a flame extinguishing effect in which flames become unstable on an adsorbent material surface, etc., with respect to ejected materials and ejected gases from the power storage device.

The ignition prevention material as described above may be used alone or in a combination of two or more types of materials.

The power storage device structure of the present invention has been described above, but there is no particular limitation on the size, shape, etc. of the power storage device (power storage device stack) in the present invention as long as the molded body including the thermally depolymerizable polymer is disposed in the gap between the power storage device (power storage device stack) and the casing. Thus, the present invention may be applied to power storage devices (power storage device stacks) of a wide range of sizes, from those for smartphones to those for vehicle use.

### Examples

The present invention will be described in further detail based on specific Examples below, but the present invention is not limited to Examples described below.

### [Overcharge test]

### (Comparative Example 1)

A PP resin container (inner dimensions: 80 mm width × 105 mm length × 34 mm depth; resin thickness: 2 mm; a container in which an electrode side of an aluminum laminate lithium-ion battery was disposed on the 80 mm width side of the PP resin container, five holes with a diameter of 10 mm were opened on the 80 mm width side of the PP resin container, and a top was opened) simulating a container of the power storage device was prepared. An aluminum laminate lithium-ion battery (35 mm width, 75 mm length) with a ternary cathode system and a 1500 mAh capacity was disposed inside the PP resin container, a PP resin plate with a resin thickness of 4 mm was taken as a lid covering from above, and a periphery of the lid was sealed without gaps using a heat-resistant tape, such that ejected materials ejected from the lithium-ion battery due to overcharging were released only through the five opened holes.

Outside the PP resin container simulating the container of the power storage device, a PP resin container (inner dimensions: 98 mm width × 148 mm length × 48 mm depth; resin thickness: 2 mm; a container in which five holes with a diameter of 10 mm were opened on the 98 mm width side and a top was opened (a container with holes opened on the side opposite to the hole opening site of the above PP resin container simulating the container of the power storage device)) simulating a container of the casing was disposed, the battery was wired to enable overcharging, a PP resin plate with a thickness of 4 mm was taken as a lid covering from above, and a periphery of the lid was sealed without gaps using a heat-resistant tape, such that ejected materials of the battery ejected due to overcharging were released only through the five opened holes, thus forming a power storage device structure.

Upon performing overcharging on the power storage device structure at 15 V and 7.5 A, the battery was destroyed after approximately 19 minutes, and intense ignition was observed on the outside of the casing.

### (Example 1)

In the power storage device structure used in Comparative Example 1, a film-shaped molded body (thickness: 125 µm; weight per unit area: 150 g/m²) of a copolymer of α-methylstyrene and methyl methacrylate (α-methylstyrene: methyl methacrylate = 58:42 (molar ratio)) serving as the thermally depolymerizable polymer was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, but no ignition was observed on the outside of the casing.

In the case where this copolymer was heated to 500°C at a heating rate of 10°C/min, decomposition into monomers occurred, and there was no blackening or residue.

### (Example 2)

In the power storage device structure used in Comparative Example 1, a plate-shaped molded body (thickness: 2000 µm; weight per unit area: 2300 g/m²) of a polymer mainly composed of methyl methacrylate (a polymer including 94% or more of a methyl methacrylate-alkyl acrylate copolymer) serving as the thermally depolymerizable polymer was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, but no ignition was observed on the outside of the casing.

In the case where this polymer was heated to 500°C at a heating rate of 10°C/min, decomposition into monomers occurred, and there was no blackening or residue.

### (Example 3)

In the power storage device structure used in Comparative Example 1, a film-shaped molded body (thickness: 125 µm; weight per unit area: 150 g/m²) of a polymer mainly composed of methyl methacrylate (a polymer including 94% or more of a mixture of a methyl methacrylate-alkyl acrylate copolymer and a methyl methacrylate-alkyl acrylate-styrene copolymer) serving as the thermally depolymerizable polymer was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, but no ignition was observed on the outside of the casing.

In the case where this polymer was heated to 500°C at a heating rate of 10°C/min, decomposition into monomers occurred, and there was no blackening or residue.

### (Comparative Example 2)

In the power storage device structure used in Comparative Example 1, a plate-shaped molded body (thickness: 1000 µm) of polyethylene terephthalate was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, and intense ignition was observed on the outside of the casing.

In the case where this polymer was heated to 500°C at a heating rate of 10°C/min, decomposition into monomers occurred, and there was no blackening or residue.

### (Comparative Example 3)

In the power storage device structure used in Comparative Example 1, a plate-shaped molded body (thickness: 500 µm) of polycarbonate was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, and intense ignition was observed on the outside of the casing.

In the case where this polymer was heated to 500°C at a heating rate of 10°C/min, blackening and residue occurred.

### (Comparative Example 4)

In the power storage device structure used in Comparative Example 1, a film-shaped molded body (thickness: 1000 µm) of nylon 66 was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, and intense ignition was observed on the outside of the casing.

In the case where this polymer was heated to 500°C at a heating rate of 10°C/min, blackening and residue occurred.

### (Comparative Example 5)

In the power storage device structure used in Comparative Example 1, a plate-shaped molded body (thickness: 500 µm) of hard vinyl chloride was adhered with a double-sided tape to an upper surface on an inner side of the PP resin plate of the top lid of the PP resin container simulating the casing in an area of 0.011 m² to form a power storage device structure.

Upon performing overcharging on the power storage device structure under the same conditions as Comparative Example 1, i.e., at 15 V and 7.5 A, the battery was destroyed after approximately 19 minutes, and intense ignition was observed on the outside of the casing.

In the case where this polymer was heated to 500°C at a heating rate of 10°C/min, blackening and residue occurred.

### (Comparative Example 6)

In the power storage device structure used in Comparative Example 1, a film-shaped molded body (thickness: 20 µm) of cellophane was adhered with a double-sided tape to an upper surface on an inner side of the PP resin plate of the top lid of the PP resin container simulating the casing in an area of 0.011 m² to form a power storage device structure.

Upon overcharging the power storage device structure under the same conditions as Comparative Example 1, i.e., at 15 V and 7.5 A, the battery was destroyed after approximately 19 minutes, and intense ignition was observed on the outside of the casing.

In the case where this polymer was heated to 500°C at a heating rate of 10°C/min, blackening and residue occurred.

## Claims

1. A power storage device structure comprising a power storage device and a casing that externally encloses the power storage device with a gap therebetween, wherein
a molded body comprising a thermally depolymerizable polymer is disposed in the gap between the power storage device and the casing.

2. The power storage device structure according to claim 1, wherein the power storage device is obtained using a non-aqueous electrolyte.

3. The power storage device structure according to claim 1, wherein in the molded body comprising the thermally depolymerizable polymer, a thermally depolymerizable polymer part is contained in an amount of 10 weight% or more of the total molded body.

4. The power storage device structure according to claim 1, wherein the thermally depolymerizable polymer is a polymer, which is a homopolymer or a copolymer of two or more components, using one or two or more of methyl methacrylate (MMA), α-methylstyrene (AMS), and tetrafluoroethylene (TFE) as monomer components.

5. The power storage device structure according to claim 1, wherein the molded body comprising the thermally depolymerizable polymer has a film shape, a sheet shape, or a plate shape.

6. The power storage device structure according to claim 5, wherein the molded body in the film shape, the sheet shape, or the plate shape has a thickness of 1 µm to 5000 µm.

7. The power storage device structure according to claim 6, wherein a weight per unit area of the molded body in the film shape, the sheet shape, or the plate shape is 10 g to 2000 g/m².

8. The power storage device structure according to any one of claims 1 to 7, wherein a plurality of the power storage devices are stacked.
